# EUROPEAN PATENT SPECIFICATION

(11) **EP 2 959 216 B1**
(45) Date of publication and mention of the grant of the patent: **22.03.2017**
(21) Application number: 14709461.9
(22) Date of filing: 17.02.2014
(51) Int. Cl.: F21V 8/00, G02B 19/00

(54) **LIGHT CONCENTRATOR ASSEMBLY**
LICHTKONZENTRATORANORDNUNG
ENSEMBLE CONCENTRATEUR DE LUMIÈRE

(30) Priority: 21.02.2013 US 201313773496
(43) Date of publication of application: 30.12.2015
(73) Proprietor: Microsoft Technology Licensing, LLC, Redmond, WA 98052 (US)
(72) Inventor: LUTIAN, John, M., Redmond, Washington 98052-6399 (US)
(74) Representative: Goddar, Heinz J.
(86) International application number: PCT/US2014/016654
(87) International publication number: WO 2014/130379

(56) References cited:
- EP-A2- 0 271 956
- US-A1- 2004 174 709
- US-A1- 2012 268 912
- US-B1- 6 469 755

## Description

### BACKGROUND

Display technology and uses have advanced over the years to the point where many different types and sizes of display systems are used in a variety of different settings. For example, tablet computers, laptop computers, audio/video players, and mobile phones all typically include display systems for displaying various content to users. In some situations users desire to keep the content being displayed private. For example, a user may be viewing a document that he or she desires to keep private and not be read by other people sitting next to the user. The light from current display systems, however, is oftentimes radiated at a wide angle. This can be problematic as it can make it difficult for users to keep the content being displayed on their devices private.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In accordance with one or more aspects, a light concentrator assembly system includes multiple light concentrators and multiple angular rotators. Each of the multiple light concentrators has an input portion and an output portion, and each is configured to reduce an angular spectrum of light from a different part of a light source received via the input portion of the light concentrator. Each of the multiple angular rotators is configured to route light from a different part of the light source to the input portion of one of the multiple light concentrators while maintaining the angular spectrum of the light.

In accordance with one or more aspects, a light concentrator assembly system includes multiple light concentrators in a light concentrator portion. Each of the multiple light concentrators is configured to receive light at an input portion of the light concentrator and output light at an output portion of the light concentrator. Each of the multiple light concentrators is further configured to reduce the angular spectrum of a light beam received from a different one of multiple parts of a same light source.

### BRIEF DESCRIPTION OF THE DRAWINGS

The same numbers are used throughout the drawings to reference like features.
Fig. 1 illustrates an example display system.
Fig. 2 illustrates an example light emitting panel.
Fig. 3 illustrates an example wedge-shaped light emitting panel.
Fig. 4 illustrates another example light emitting panel.
Fig. 5 illustrates an example light concentrator assembly.
Fig. 6 illustrates an example light source having multiple parts.
Fig. 7 illustrates another example light concentrator assembly.
Figs. 8, 9, 10, 11, and 12 illustrate example implementations of light concentrator assemblies.
Fig. 13 illustrates a light concentrator assembly generated as multiple pieces.
Fig. 14 is a flowchart illustrating an example process for narrowing light beams
Fig. 15 illustrates an example computing device that can be configured to implement a light concentrator assembly in accordance with one or more embodiments.

### DETAILED DESCRIPTION

A light concentrator assembly is discussed herein. The light concentrator assembly includes a concentrator portion having multiple light concentrators. The light concentrator assembly concentrates light received from different parts of a light source, such as a light emitting diode (LED), and outputs light beams that have an angular spectrum narrower than the light beam received from the light source. Each concentrator of the light concentrator assembly concentrates light from one or more parts of the same light source. The concentrators in the light concentrator assembly can have various shapes, such as an approximately parabolic shape.

The light beams received by the concentrator portion have the same (or approximately the same) angular spectrum as the light output by the light source. Depending on the number and/or shape of concentrators in the concentrator portion, the light concentrator assembly can include an angular rotator portion having multiple angular rotators that each route light from one or more parts of the light source to a different one of the multiple concentrators. Each angular rotator portion routes the light from one or more of the parts of the light source while maintaining the angular spectrum of the light output by that part of the light source.

The light output by the multiple concentrators of the concentrator portion has a light beam width that increases to preserve etendue of the concentrator as the output becomes more collimated. However, because each of the multiple concentrators concentrates light for only part of the light source, each of the multiple concentrators can be shorter than a single concentrator would be, allowing the light concentrator assembly itself to be shorter and thus used in smaller spaces than a single larger concentrator can be used.

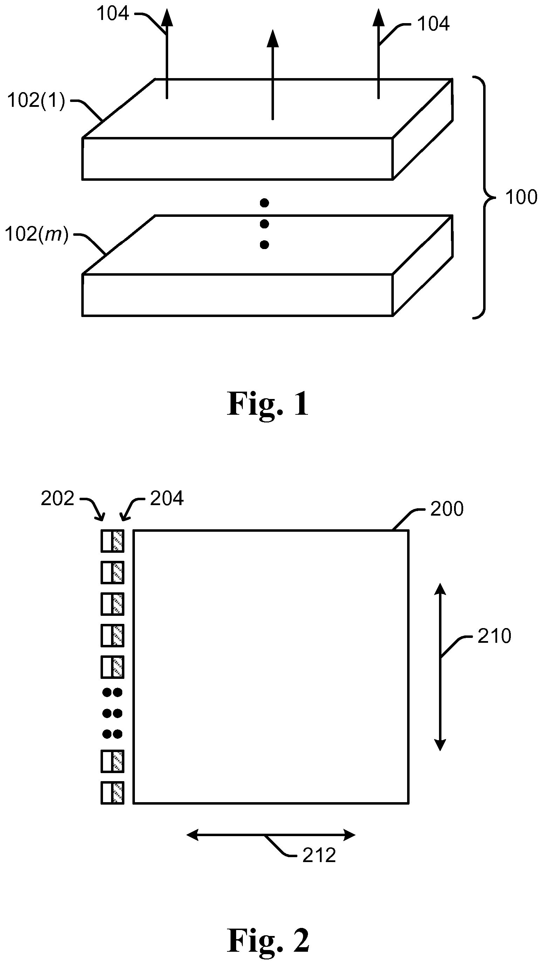

Fig. 1 illustrates an example display system 100 including a light concentrator assembly. Display system 100 includes multiple (m) layers 102, one or more of which may also be referred to as a panel. Display system 100 includes a top layer 102(1) and one or more lower layers 102(2), ..., 102(m). Layers 102 are referred to as being on top of or above one another, with layer 102(1) being a top layer and layer 102(m) being a bottom layer. Thus, for example, layer 102(m) is referred to as being below or under layer 102(1), and layer 102(1) is referred to as being above or on top of layer 102(m).

Layers 102 can be configured to implement various functionality, such as filtering light emitted by another layer 102, providing protection against scratches to other layers, providing protection against breakage of display system 100, sensing touch or other inputs to display system 100, and so forth. Layers 102 include at least one light emitting panel that emits light that is in turn emitted or output by display system 100. Light is emitted from display system 100 outward from the top surface of top layer 102(1) in the direction illustrated by arrows 104.

Display system 100 emits light in the direction illustrated by arrows 104, and has a narrow angular distribution of light. The angular distribution of light refers to the range of angles relative to a particular direction (e.g., the normal of the surface of display system 100 from which light is emitted) that the light can be seen by a user and thus the content being displayed viewed by the user. The angular distribution of light can also be referred to as the viewing angles for display system 100.

In display system 100, light is emitted by at least one layer 102 that is a light emitting panel. The light emitting panel can be implemented in a variety of different manners.

Fig. 2 illustrates a top or bottom view of an example light emitting panel 200. Multiple light sources 202 are illustrated along one side of panel 200. Each light source 202 can be, for example, an LED. The light from light sources 202 is routed through light concentrator assemblies 204, illustrated with cross-hatching in Fig. 2, and into light emitting panel 200. Light concentrator assemblies 204 are discussed in additional detail below. Light input into light emitting panel 200 from light sources 202 along one or more sides of panel 200 is output from the top surface of a display system including light emitting panel 200 (e.g., the direction illustrated by arrows 104 of Fig. 1).

Light sources 202 emit light having a particular etendue, which is the product of the beam width and the angular distribution of the emitted light (beam width x angular distribution). The angular distribution of the light refers to the range of angles relative to a particular direction that the light can be seen by a user as discussed above. The beam width of the light refers to the physical width (the physical area) of the light source emitting the light (e.g., the physical area of a surface of light source 202 from which the light is emitted). Light concentrator assemblies 204 reduce the angular distribution of light output by light sources 202. The angular distribution of light output by a display system including light emitting panel 200 is dependent on the angular distribution of light input to light emitting panel 200. The angular distribution of light output by a display system including panel 200 increases as the angular distribution of light input to panel 200 increases, and decreases as the angular distribution of light input to panel 200 decreases. Thus, by narrowing the angular distribution of the light input into light emitting panel 200 using light concentrator assemblies 204, the angular distribution of light output by panel 200 can also be narrowed.

In the example of Fig. 2, light sources 202 and light concentrator assemblies 204 are situated along one side of panel 200. Alternatively, light sources 202 and light concentrator assemblies 204 can be situated along two or more sides of panel 200.

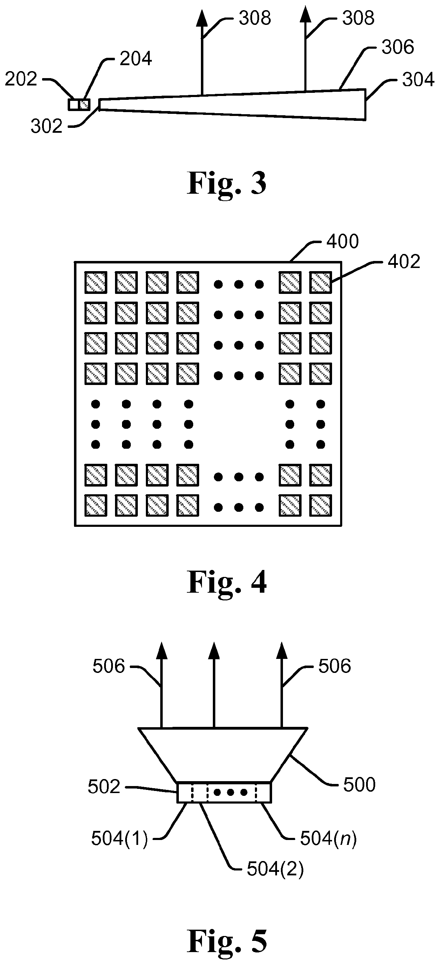

Light emitting panel 200 can be implemented in a variety of different manners. Light emitting panel 200 is implemented using plastic or glass, and has a wedge shape as illustrated in the side view or cross-section view of Fig. 3. The wedge shape has a narrow surface 302 that is the surface closest to the light sources 202, and a wide surface 304 that is the surface furthest from light sources 202. Light is input to panel 200 from light concentrator assemblies 204 along narrow surface 302. The shape of panel 200 (the shape of the wedge) determines the locations at which light input to panel 200 is emitted from the top surface 306 of panel 200 in the direction shown by arrows 308. The wedge shape of the panel 200 also serves to reduce the angular distribution or spectrum of light in one dimension 210 of Fig. 2, also referred to as the y dimension or vertical direction for simplicity. Light concentrator assemblies 204 serve to reduce the angular distribution or spectrum of light in the other dimension 212 of Fig. 2, also referred to as the x dimension or horizontal direction for simplicity.

Fig. 4 illustrates a top view of another example light emitting panel 400. Multiple light concentrator assemblies 402 are illustrated with cross-hatching in Fig. 4, below which are light sources. Each light source can be, for example, an LED. Light concentrator assemblies 402 and light sources are included in panel 400 rather than (or in addition to) being situated along one or more sides of the light emitting panel (e.g., as illustrated in Fig. 2). The light output by the light sources is routed through light concentrator assemblies, which are discussed in additional detail below.

Similar to the discussion above regarding Fig. 2, the angular distribution of light output by a display system including light emitting panel 400 is dependent on the angular distribution of light output by light concentrator assemblies 402. The angular distribution of light output by a display system including panel 400 increases as the angular distribution of the light output by light concentrator assemblies 402 increases, and decreases as the angular distribution of the light output by light concentrator assemblies 402 decreases. Thus, by narrowing the angular distribution of the light output by the light concentrator assemblies, the angular distribution of light output by panel 400 can also be narrowed.

Fig. 5 illustrates a side view or cross-section view of an example light concentrator assembly 500. Light is input to light concentrator assembly 500 from a light source 502, such as an LED. Light concentrator assembly 500 includes multiple light concentrators, each of which concentrates light received from one or more of multiple (n) different parts 504(1), ..., 504(*n*) of light source 502. Concentrating light refers to narrowing the angular distribution of the light. Each of the multiple concentrators receives light at an input portion situated adjacent to a part 504 of light source 502, and outputs light from an output portion in the direction of arrows 506. The light output by each of the multiple light concentrators in light concentrator assembly 500 is output in a direction parallel or approximately parallel to the light output by each of the other ones of the multiple light concentrators in assembly 500. Light concentrator assembly 500 is illustrated as a trapezoid simply to represent the multiple concentrators - the shape of the concentrators in assembly 500 can vary based on the number of concentrators included in assembly 500 and vary for different implementations as desired by the designer of light concentrator assembly 500.

Light source 502 is typically a single light source, such as a single LED, but is treated as having multiple different parts. Although light source 502 is treated as having multiple different parts, light source 502 need not be (and typically is not) physically changed to obtain this separation into different parts.

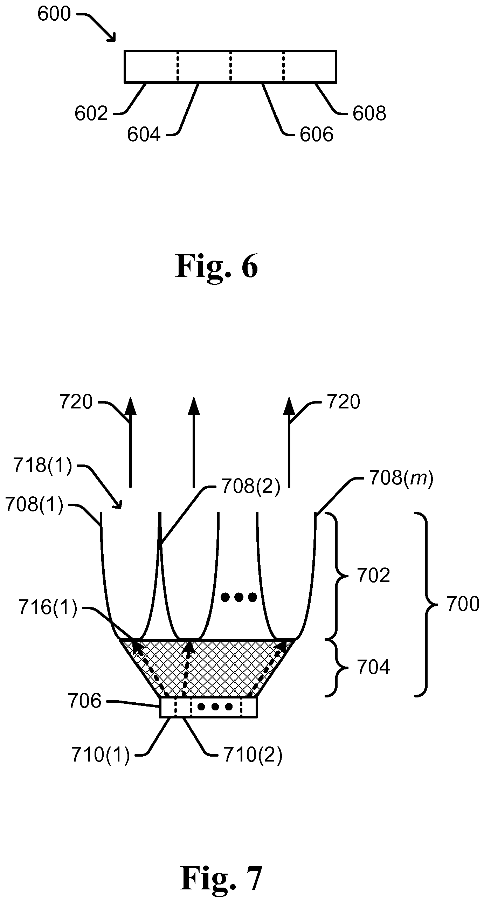

Fig. 6 illustrates a side view or cross-section view of an example light source 600 having multiple parts. Fig. 6 illustrates the surface of light source 600 from which light is emitted (e.g., the top of an LED). Light source 600 can be various sizes (for example, light source 600 may be an LED having a light emitting surface that is rectangular in shape, measuring 2.0 millimeters long by 0.3 millimeters wide). Light source 600 is separated into four different parts: part 602, part 604, part 606, and part 608. The separation is performed by routing light into different light concentrators (either directly or through angular rotators as discussed below) rather than physically altering light source 600. Light emitted by these different parts is concentrated by one or more light concentrators of a light concentrator assembly prior to being input to a light emitting panel (e.g., panel 200 of Fig. 2) and/or prior to being output by the light emitting panel (e.g., panel 400 of Fig. 4).

In the illustrated example of Fig. 6, light source 600 is separated into four approximately equal parts. However, it should be noted that light source 600 can be separated into any number of different parts. Furthermore, it should be noted that light source 600 can be separated into multiple parts of different sizes. For example, light source 600 can be separated into three parts, with a middle part that is larger than the parts on either side of the middle part.

Fig. 7 illustrates a side view or cross-section view of an example light concentrator assembly 700. Light concentrator assembly 700 includes a concentrator portion 702 and an angular rotator portion 704. Light is input to light concentrator assembly 700 from a light source 706, such as an LED. Angular rotator portion 704 includes multiple angular rotators that route the light from different parts of light source 706 to different concentrators 708(1), ..., 708(m) of concentrator portion 702. For example, light from part 710(1) of light source 706 is routed by an angular rotator to concentrator 708(1), light from part 710(2) of light source 706 is routed by an angular rotator to concentrator 708(2), and so forth.

Angular rotator portion 704 is illustrated as a trapezoid with cross-hatching simply to represent the multiple angular rotators - the shape of the angular rotators in portion 704 can vary based on the number of angular rotators included in portion 704 and for different implementations as desired by the designer of light concentrator assembly 700. Each angular rotator routes light from a part of light source 706 to an input portion of a corresponding concentrator 708. Each angular rotator in portion 704 preserves the angular spectrum of the light beam input to the angular rotator, resulting in the light beam input to the input portion of a concentrator 708 having the same (or approximately the same) angular spectrum as the light beam had when input to the angular rotator (e.g., the same or approximately the same angular spectrum as the light beam had when output by the part of light source 706). In some situations there is a one-to-one correlation between angular rotators and concentrators, so each angular rotator routes light to a single concentrator. Alternatively, in some situations an angular rotator can route light to the input portions of multiple concentrators.

The angular spectrum of light refers to the intensity of the light at various angles relative to a reference direction (e.g., a normal of the surface from which the light is emitted). For example, a light source may emit light having an angular spectrum that is a 60-degree Lambertian output, with the light intensity dropping 50% at plus or minus 60 degrees from the reference direction. The angular spectrum of light can be reduced or narrowed, which refers to reducing the intensity of the light at particular angles relative to the reference direction, typically reducing the intensity of the light at angles further from the reference direction. For example, the angular spectrum of the light emitted by a light source may have a reduced angular spectrum with the light intensity dropping 50% at plus or minus 20 degrees from the reference direction. Thus, by reducing or narrowing the angular spectrum of light, the angular distribution of the light is also reduced or narrowed.

Concentrators 708 concentrate light received at an input portion (e.g., portion 716(1) of concentrator 708(1)), and output the light at an output portion (e.g., portion 718(1) of concentrator 708(1)) in the direction of arrows 720. The light output by each of the multiple light concentrators in light concentrator assembly 700 is output in a direction parallel or approximately parallel to the light output by each of the other ones of the multiple light concentrators in assembly 700. In the illustrated example, concentrators 708 have an approximately parabolic shape with a narrower input portion than output portion. Although concentrators 708 are illustrated as being approximately parabolic, it should be noted that concentrators of other shapes can alternatively be used.

The light output by a light concentrator assembly (e.g., assembly 500 of Fig. 5 or assembly 700 of Fig. 7) is the combined light output by the multiple light concentrators of the assembly and has an angular distribution that is approximately the same as can be achieved using a single concentrator for the light source rather than an assembly of multiple concentrators. However, to achieve a light angular distribution that is approximately the same as achieved using the light concentrator assemblies discussed herein, such a single light source concentrator would be significantly longer (e.g., three to four times longer in the case of a light concentrator assembly with four light concentrators). Thus, by treating the light source as multiple separate light sources, and using different light concentrators to narrow the light angular distribution for the light emitted from different parts of the light source, the length of the light concentrator assembly can be reduced and the light concentrator can be placed in locations (e.g., a bezel around a display system) where there is insufficient space for a single concentrator.

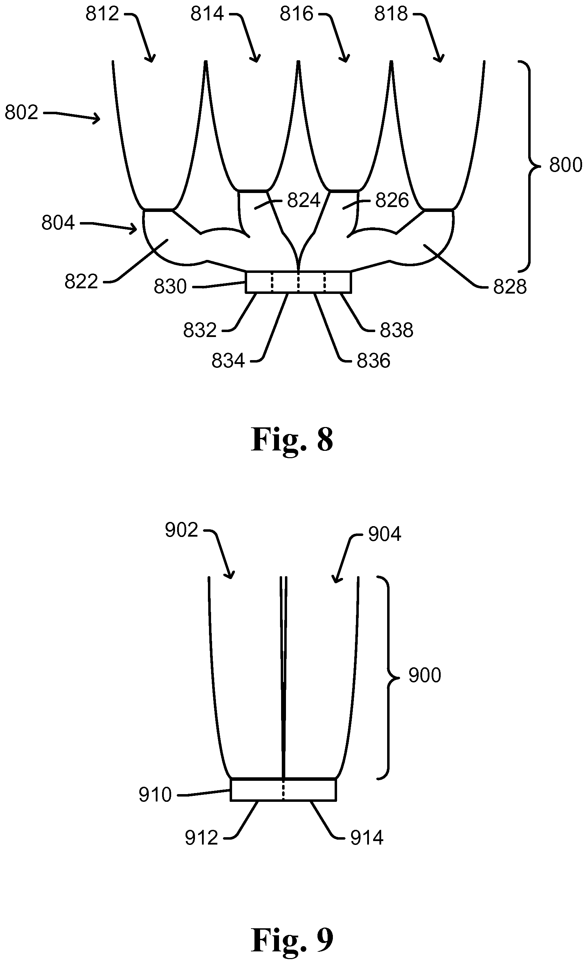

The light concentrator assembly 500 of Fig. 5 and 700 of Fig. 7 can be implemented in a variety of different manners. Figs. 8-12 illustrate example implementations of light concentrator assemblies 500 or 700. It should be noted, however, that the examples of Figs. 8-12 are merely examples, and that other implementations can alternatively be used.

In the illustrated examples of light concentrator assemblies in Figs. 5 and 7-12, a side view or cross-section view of the light concentrators are illustrated. In one or more cases the light source is a rectangle (e.g., as illustrated in Fig. 6). In such cases , the light concentrator assemblies are three-dimensional components that are extruded along the width of the light source. For example, if light source 706 of Fig. 7 were 2.0 millimeters long by 0.3 millimeters wide and Fig. 7 illustrated a side view or cross-section view along the length of light source 706, then light concentrator assembly 700 would extrude outward or inward from the drawing page 0.3 millimeters. In other cases the light source can have different shapes. In such cases the light concentrator assemblies are three-dimensional components that are extruded along the contour of the shapes of the parts of the light sources. For example, if a light source were to be a circle and the multiple light concentrators of the concentrator portion approximately parabolic shapes, then the multiple light concentrators can be approximately circularly symmetrical to follow the contour of the circle shape of the light source.

Fig. 8 illustrates a side view or cross-section view of an example light concentrator assembly 800. Light concentrator assembly 800 includes a concentrator portion 802 and an angular rotator portion 804. Concentrator portion 802 includes four concentrators 812, 814, 816, and 818, each of which has an approximately parabolic shape. Angular rotator portion 804 includes four angular rotators 822, 824, 826, and 828. Each angular rotator routes light from a part of light source 830 to an input portion of a corresponding concentrator in concentrator portion 802. Light source 830 includes four parts 832, 834, 836, and 838.

Angular rotator 822 routes light from light source part 832 (as well as some light from light source part 834) to concentrator 812 while preserving the angular spectrum of the light beam output by light source parts 832 and 834. Angular rotator 824 routes light from light source part 834 (as well as some light from light source part 832) to concentrator 814 while preserving the angular spectrum of the light beam output by light source parts 832 and 834. Angular rotator 826 routes light from light source part 836 (as well as some light from light source part 838) to concentrator 816 while preserving the angular spectrum of the light beam output by light source parts 836 and 838. Angular rotator 828 routes light from light source part 838 (as well as some light from light source part 836) to concentrator 818 while preserving the angular spectrum of the light beam output by light source parts 836 and 838.

Fig. 9 illustrates a side view or cross-section view of an example light concentrator assembly 900. Light concentrator assembly 900 includes two concentrators 902 and 904 that make up a concentrator portion. Each concentrator 902 and 904 has an approximately parabolic shape. Each concentrator 902 and 904 receives light from a part of light source 910. Light source 910 includes two parts 912 and 914. Light concentrator assembly 900 need not include an angular rotator portion. Rather, the light concentrators 902 and 904 reduce the angular distribution of light received from light source parts 912 and 914, respectively.

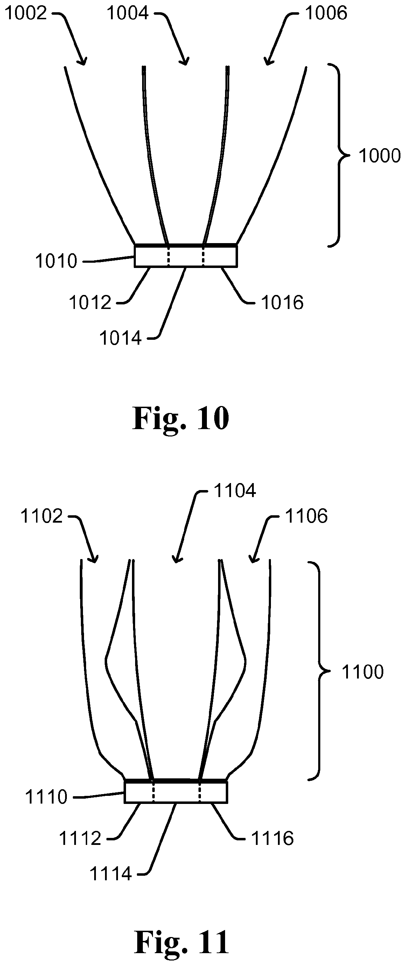

Fig. 10 illustrates a side view or cross-section view of an example light concentrator assembly 1000. Light concentrator assembly 1000 includes three concentrators 1002, 1004 and 1006 that make up a concentrator portion. Concentrator 1004 has an approximately parabolic shape, and concentrators 1002 and 1006 on either side of concentrator 1004 have partial parabolic shapes. The partial parabolic shapes 1002 and 1006 are approximately parabolic on one side (the side not adjacent concentrator 1004), and an approximately opposite or reversed parabolic shape on the other side (the side adjacent concentrator 1004). Each concentrator 1002, 1004, and 1006 receives light from a part of light source 1010. Light source 1010 includes three parts 1012, 1014, and 1016. Light concentrator assembly 1000 need not include an angular rotator portion. Rather, the light concentrators 1002, 1004, and 1006 reduce the angular distribution of light received from light source parts 1012, 1014, and 1016, respectively.

Fig. 11 illustrates a side view or cross-section view of an example light concentrator assembly 1100. Light concentrator assembly 1100 includes three concentrators 1102, 1104, and 1106 that make up a concentrator portion. Concentrator 1104 has an approximately parabolic shape, and concentrators 1102 and 1106 on either side of concentrator 1104 have different shapes. Each concentrator 1102, 1104, and 1106 receives light from a part of light source 1110. Light source 1110 includes three parts 1112, 1114, and 1116. Light concentrator assembly 1100 need not include an angular rotator portion. Rather, the light concentrators 1102, 1104, and 1106 reduce the angular distribution of light received from light source parts 1112, 1114, and 1116, respectively.

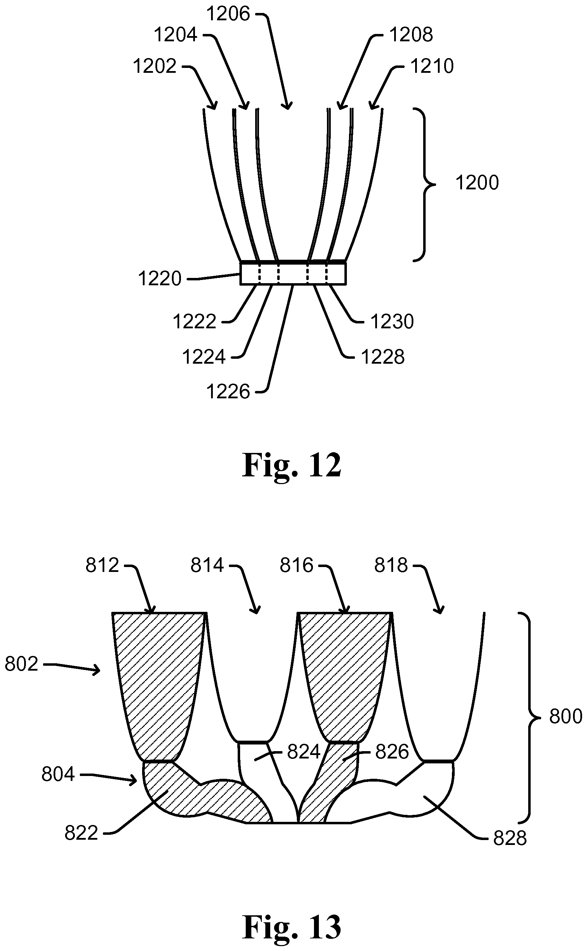

Fig. 12 illustrates a side view or cross-section view of an example light concentrator assembly 1200. Light concentrator assembly 1200 includes five concentrators 1202, 1204, 1206, 1208, and 1210 that make up a concentrator portion. Concentrator 1206 has an approximately parabolic shape, and concentrators 1202, 1204, 1208, and 1210 on either side of concentrator 1206 have partial parabolic shapes. The partial parabolic shapes of concentrators 1202, 1204, 1208, and 1210 are approximately parabolic on one side (the side furthest from concentrator 1206), and an approximately opposite or reversed parabolic shape on the other side (the side closest to concentrator 1206). Each concentrator 1202, 1204, 1206, 1208, and 1210 receives light from a part of light source 1220. Light source 1220 includes five parts 1222, 1224, 1226, 1228, and 1230. Light concentrator assembly 1200 need not include an angular rotator portion. Rather, the light concentrators 1202, 1204, 1206, 1208, and 1210 reduce the angular distribution of light received from light source parts 1222, 1224, 1216, 1218, and 1220, respectively.

The light concentrator assemblies discussed herein can be manufactured in a variety of different manners. In some cases , the light concentrator assemblies are manufactured using injection molding, with spaces surrounding the light concentrators and angular rotators (if any) being represented by pins or other metal pieces of a mold. The light concentrators and angular rotators (if any) are filled with a material having high transparency and low light scattering characteristics, such as acrylic, polycarbonate, glass, or other material through which light can travel using conventional injection molding techniques, and then the pins or other metal pieces are removed. After removal of the pins or other metal pieces, the light concentrators and angular rotators manufactured from the injected material remain.

In some situations, manufacturing of the light concentrator assemblies can be made more difficult due to their small size. In such situations, the light concentrators and/or angular rotators can be generated as multiple pieces and then combined in order to facilitate the manufacturing of the light concentrator assemblies (e.g., by allowing larger pins or other pieces of metal to be used).

Fig. 13 illustrates a light concentrator assembly generated as multiple pieces. Fig. 13 illustrates a light concentrator assembly 800, as discussed above with reference to Fig. 8. One set of two light concentrators 812 and 816 and two angular rotators 822 and 826 are generated together, which are illustrated with cross-hatching in Fig. 13. Another set of the other two light concentrators 814 and 818 and the other two angular rotators 824 and 828, are generated together. These two light concentrator and angular rotator sets are then combined together (e.g., physically placed adjacent one another so that the light concentrators and corresponding angular rotators of the different sets are interspersed with one another as illustrated in Fig. 13) to form the light concentrator assembly 800.

By manufacturing the light concentrator assembly in multiple pieces and combining the pieces, the pins or other metal pieces can be much larger than if the entire light concentrator assembly were manufactured as a single piece. For example, rather than having a pin or metal piece to occupy the space between light concentrators 812 and 814 and angular rotators 822 and 824, the pins or metal pieces can be larger as they occupy (when generating the one set of two light concentrators 812 and 816, and two angular rotators 822 and 826) the space between light concentrators 812 and 816 and angular rotators 822 and 826.

Alternatively, the light concentrator assemblies discussed herein can be manufactured in different manners. For example, the light concentrator assemblies can be manufactured using injection molding, with the light concentrators and angular rotators (if any) being represented by pins or other metal pieces of a mold. The surrounding areas (where pins or metal are absent) are filled with a plastic (e.g., acrylic or polycarbonate) or other material (which may have high transparency and low light scattering characteristics) using conventional injection molding techniques, and then the pins or other metal pieces are removed. Thus, rather than the concentrator assemblies themselves being manufactured from plastic or other material through which light can travel, the light concentrator assemblies are the spaces within the plastic after removal of the pins or other metal pieces.

A display system including the light concentrator assemblies discussed herein supports a private viewing mode. When in the private viewing mode, the angular distribution of light output by the display system is narrowed (e.g., plus or minus 20 degrees from a normal of the surface of the display system). A normal or non-private viewing mode can also be supported by the display system, in which the angular distribution of light output by the display system is wider than the private viewing mode (e.g., plus or minus 60 degrees from a normal of the surface of the display system).

The private viewing and normal viewing modes can be implemented in a variety of different manners. In an embodiment of the present invention, different light sources are interspersed among one another in the display system, some outputting light through light concentrator assemblies and others not outputting light through light concentrator assemblies. For example, a row of LEDs along one side of a light emitting panel can input light to the light emitting panel, with alternating (e.g., odd numbered) LEDs outputting light through light concentrator assemblies and other (e.g., even numbered) LEDs not outputting light through light concentrator assemblies. In such embodiments, the private viewing mode is activated by powering on and using the light sources that output light through light concentrator assemblies as the light sources for the light emitting panel of the display system, and the normal viewing mode is activated by powering on and using the light sources that do not output light through light concentrator assemblies as the light sources for the light emitting panel of the display system.

It should be noted that, for the light concentrator assemblies discussed herein, all (or approximately all) of the light from the light source is input to the multiple concentrators of the light concentrator assembly. In situations in which the light concentrator assembly does not include an angular rotator portion, the input portions of the multiple light concentrators of the light concentrator assembly receive all (or approximately all) of the light directly from the light source. In situations in which the light concentrator assembly includes an angular rotation portion, the angular rotators of the angular rotation portion route all (or approximately all) of the light from the light source to the multiple light concentrators of the light concentrator assembly. Thus, very little (if any) light from the light source is lost as a result of using the light concentrator assembly discussed herein.

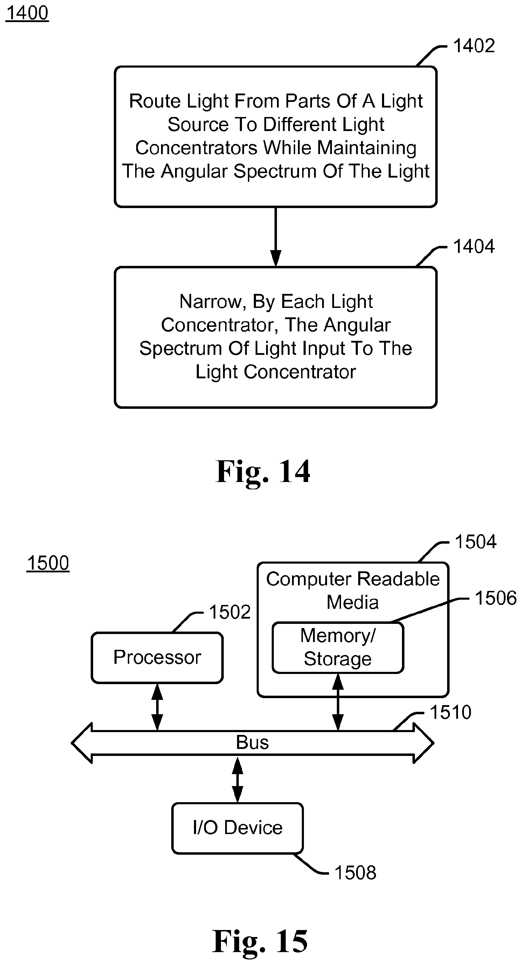

Fig. 14 is a flowchart illustrating an example process 1400 for narrowing light beams. Process 1400 is carried out by a display system, such as display system 100 of Fig. 1. Process 1400 is shown as a set of acts and is not limited to the order shown for performing the operations of the various acts. Process 1400 is an example process for narrowing light beams; additional discussions of narrowing light beams are included herein with reference to different figures.

In process 1400, light is routed from different parts of a light source to light concentrators while maintaining the angular spectrum of the light (act 1402). The light concentrators are different light concentrators of a concentrator assembly, as discussed above. The light from the different parts of the light source can be input to the light concentrators directly, or can be routed through angular rotators of an angular rotator portion prior to being input to the light concentrators as discussed above.

Each light concentrator narrows the angular spectrum of the light input to the light concentrator (act 1404). By narrowing the angular spectrum, the angular distribution of the light is also narrowed. The light concentrators are different light concentrators of a concentrator assembly, as discussed above. The light concentrators can have various shapes as discussed above.

Fig. 15 illustrates an example computing device 1500 that can be configured to implement a light concentrator assembly in accordance with one or more embodiments. Computing device 1500 can be any of a variety of different types of devices, such as a desktop computer, a server computer, a laptop or netbook computer, a tablet or notepad computer, a mobile station, an entertainment appliance, a set-top box communicatively coupled to a display device, a television or other display device, a cellular or other wireless phone, a game console, an automotive computer, and so forth. Computing device 1500 can also be configured to control a manufacturing system building a light concentrator assembly.

Computing device 1500 includes hardware components including one or more processors 1502, one or more computer readable media 1504 which can include one or more memory and/or storage components 1506, one or more input/output (I/O) devices 1508, and a bus 1510 that allows the various components and devices to communicate with one another. Various additional hardware components can optionally be included in computing device 1500. Computer readable media 1504 and/or one or more I/O devices 1508 can be included as part of, or alternatively may be coupled to, computing device 1500. Processor 1502, computer readable media 1504, one or more of devices 1508, and/or bus 1510 can optionally be implemented as a single component or chip (e.g., a system on a chip). Bus 1510 represents one or more of several types of bus structures, including a memory bus or memory controller, a peripheral bus, an accelerated graphics port, a processor or local bus, and so forth using a variety of different bus architectures. Bus 1510 can include wired and/or wireless buses.

Memory/storage component 1506 represents one or more computer storage media. Component 1506 can include volatile media (such as random access memory (RAM)) and/or nonvolatile media (such as read only memory (ROM), Flash memory, optical disks, magnetic disks, and so forth). Component 1506 can include fixed media (e.g., RAM, ROM, a fixed hard drive, etc.) as well as removable media (e.g., a Flash memory drive, a removable hard drive, an optical disk, and so forth).

One or more input/output devices 1508 allow a user to enter commands and information to computing device 1500, and also allows information to be presented to the user and/or other components or devices Examples of input devices include a keyboard, a cursor control device (e.g., a mouse), a microphone (e.g., for voice inputs), a touchscreen or other sensor (e.g., for gesture inputs), a scanner, and so forth. Examples of output devices include a display device (e.g., a monitor or projector), speakers, a printer, a network card, and so forth. Input/output devices 1508 can include a display system 100 of Fig. 1.

Computing device 1500 can implement various functionality using software or program modules. Generally, software includes routines, programs, applications, objects, components, data structures, and so forth that perform particular tasks or implement particular abstract data types. An implementation of these modules and techniques may be stored on or transmitted across some form of computer readable media. Computer readable media can be any available medium or media that can be accessed by a computing device. By way of example, and not limitation, computer readable media may comprise "computer storage media" and "communication media".

"Computer storage media" include volatile and non-volatile, removable and non-removable media implemented in any method or technology for storage of information such as computer readable instructions, data structures, program modules, or other data. Computer storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer. Computer storage media refer to media for storage of information and/or storage that is tangible, in contrast to mere signal transmission, carrier waves, or signals per se. Thus, computer storage media refers to non-signal bearing media, and is not communication media.

"Communication media" typically embody computer readable instructions, data structures, program modules, or other data in a modulated data signal, such as carrier wave or other transport mechanism. Communication media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media. Combinations of any of the above are also included within the scope of computer readable media.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A display system comprising:
a plurality of light sources; and
a plurality of light concentrator assembly systems, each of said systems including multiple light concentrators each having an input portion and an output portion, each light concentrator being configured to reduce an angular spectrum of light from a different light source received via the input portion of the light concentrator; and
multiple angular rotators each configured to route light from a different light source to the input portion of one of the multiple light concentrators while maintaining the angular spectrum of the light;
wherein the plurality of light sources includes one or more first light sources configured to output light through one or more of the plurality of light concentrator assemblies, and one or more second light sources configured to not output light through one or more of the plurality of light concentrator assemblies, and wherein the one or more first light sources and one or more second light sources are aligned in an alternating constellation, and
wherein the display system is configured to provide a private viewing mode by powering on and using the one or more first light sources, and to provide a normal viewing mode by powering on and using the one or more second light sources.

2. A display system as recited in claim 1, the multiple angular rotators comprising a same number of angular rotators as light concentrators of the multiple light concentrators, each of the multiple angular rotators being configured to route light to a single one of the multiple light concentrators.

3. A display system as recited in claim 1, the multiple angular rotators being configured to route approximately all of the light from the light source to the multiple light concentrators.

4. A display system as recited in claim 1, each of the multiple light concentrators being configured to output a light beam in a direction approximately parallel to directions of light beams output by other light concentrators of the multiple light concentrators.

5. A display system as recited in claim 1, the multiple light concentrators configured to outputting light to a light emitting panel when a display system including the light concentrator assembly system is operating in the private viewing mode, but not configured to output light to the light emitting panel when the display system is operating in the normal viewing mode.

6. A display system as recited in claim 1, each light source comprising a single light emitting diode.

## Patentansprüche

1. Displaysystem, umfassend:
eine Vielzahl von Lichtquellen; und
eine Vielzahl von Lichtkonzentratoranordnungssystemen, wobei jedes besagter Systeme mehrere Lichtkonzentratoren jeweils mit einem Eingabebereich und einem Ausgabebereich enthält, wobei jeder Lichtkonzentrator konfiguriert ist, um ein Winkelspektrum von Licht von einer anderen Lichtquelle, das über den Eingabebereich des Lichtkonzentrators empfangen wurde, zu reduzieren; und
mehrere Winkelrotatoren, die jeweils konfiguriert sind, um Licht von einer anderen Lichtquelle zum Eingabebereich von einem der mehreren Lichtkonzentratoren unter Aufrechterhaltung des Winkelspektrums des Lichts zu lenken;
wobei die Vielzahl von Lichtquellen eine oder mehrere erste Lichtquellen, die konfiguriert ist/sind, um Licht durch einen oder mehrere der Vielzahl von Lichtkonzentratoranordnungen auszugeben, und eine oder mehrere zweite Lichtquellen enthält, die konfiguriert ist/sind, um nicht Licht durch eine oder mehrere der Vielzahl von Lichtkonzentratoranordnungen auszugeben, und wobei die eine oder mehreren ersten Lichtquellen und die einen oder mehreren zweiten Lichtquellen alternierend angeordnet sind, und wobei das Displaysystem konfiguriert ist, um einen privaten Ansichtsmodus durch Einschalten und Verwenden der einen oder mehreren ersten Lichtquellen bereitzustellen und einen normalen Ansichtsmodus durch Einschalten und Verwenden der einen oder mehreren zweiten Lichtquellen bereitzustellen.

2. Displaysystem nach Anspruch 1, wobei die mehreren Winkelrotatoren die gleiche Anzahl von Winkelrotatoren wie Lichtkonzentratoren der mehreren Lichtkonzentratoren umfassen, wobei jeder der mehreren Winkelrotatoren konfiguriert ist, um Licht zu einem einzigen der mehreren Lichtkonzentratoren zu lenken.

3. Displaysystem nach Anspruch 1, wobei die mehreren Winkelrotatoren konfiguriert sind, um näherungsweise das gesamte Licht von der Lichtquelle zu den mehreren Lichtkonzentratoren zu lenken.

4. Displaysystem nach Anspruch 1, wobei jeder der mehreren Lichtkonzentratoren konfiguriert ist, um einen Lichtstrahl in einer Richtung näherungsweise parallel zu den Richtungen von Lichtstrahlen auszugeben, die von anderen Lichtkonzentratoren der mehreren Lichtkonzentratoren ausgegeben werden.

5. Displaysystem nach Anspruch 1, wobei die mehreren Lichtkonzentratoren konfiguriert sind, um Licht zu einem Leuchtpanel auszugeben, wenn das Displaysystem einschließlich des Lichtkonzentratoranordnungssystems im privaten Ansichtsmodus arbeitet, aber nicht konfiguriert ist, Licht zum Leuchtpanel auszugeben, wenn das Displaysystem im normalen Ansichtsmodus arbeitet.

6. Displaysystem nach Anspruch 1, wobei jede Lichtquelle eine einzige Leuchtdiode umfasst.

## Revendications

1. Système d'affichage comprenant :
une pluralité de sources de lumière ; et
une pluralité de systèmes d'assemblage de concentrateurs de lumière, chacun desdits systèmes comprenant de multiples concentrateurs de lumière comportant chacun une partie d'entrée et une partie de sortie, chaque concentrateur de lumière étant configuré pour réduire un spectre angulaire de la lumière provenant d'une source de lumière différente reçue par l'intermédiaire de la partie d'entrée du concentrateur de lumière ; et
de multiples rotateurs angulaires configurés chacun pour acheminer la lumière provenant d'une source de lumière différente vers la partie d'entrée de l'un des multiples concentrateurs de lumière tout en maintenant le spectre angulaire de la lumière ;
dans lequel la pluralité de sources de lumière comprend une ou plusieurs premières sources de lumière configurées pour sortir la lumière par l'intermédiaire d'un ou de plusieurs de la pluralité de systèmes d'assemblage de concentrateurs de lumière, et une ou plusieurs deuxièmes sources de lumière configurées pour ne pas sortir la lumière par l'intermédiaire d'un ou de plusieurs de la pluralité de systèmes d'assemblage de concentrateurs de lumière, et dans lequel lesdites une ou plusieurs premières sources de lumière et lesdites une ou plusieurs deuxièmes sources de lumière sont alignées en une constellation alternée, et dans lequel le système d'affichage est configuré pour fournir un mode de vision privé en alimentant et en utilisant lesdites une ou plusieurs premières sources de lumière, et pour fournir un mode de vision normal en alimentant et en utilisant lesdites une ou plusieurs deuxièmes sources de lumière.

2. Système d'affichage selon la revendication 1, dans lequel les multiples rotateurs angulaires comprennent un même nombre de rotateurs angulaires que de concentrateurs de lumière des multiples concentrateurs de lumière, chacun des multiples rotateurs angulaires étant configuré pour acheminer la lumière vers un concentrateur unique parmi les multiples concentrateurs de lumière.

3. Système d'affichage selon la revendication 1, dans lequel les multiples rotateurs angulaires sont configurés pour acheminer à peu près toute la lumière de la source de lumière vers les multiples concentrateurs de lumière.

4. Système d'affichage selon la revendication 1, dans lequel chacun des multiples concentrateurs de lumière est configuré pour sortir un faisceau de lumière dans une direction à peu près parallèle aux directions des faisceaux de lumière sortis par les autres concentrateurs de lumière parmi les multiples concentrateurs de lumière.

5. Système d'affichage selon la revendication 1, dans lequel les multiples concentrateurs de lumière sont configurés pour sortir la lumière vers un panneau d'émission de lumière lorsqu'un système d'affichage comprenant le système d'assemblage de concentrateurs de lumière fonctionne dans le mode de vision privé, mais ne sont pas configurés pour sortir la lumière vers le panneau d'émission de lumière lorsque le système d'affichage fonctionne dans le mode de vision normal.

6. Système d'affichage selon la revendication 1, dans lequel chaque source de lumière comprend une diode électroluminescente unique.
